# EUROPÄISCHE PATENTANMELDUNG

(11) **EP 4 174 593 A1**
(43) Veröffentlichungstag der Anmeldung: **03.05.2023**
(21) Anmeldenummer: 21205887.9
(22) Anmeldetag: 02.11.2021
(51) Int. Cl.: G05B 19/042

(54) **VERFAHREN ZUM BETREIBEN EINES GERÄTS IN EINEM IOT-SYSTEM**

(71) Anmelder: Siemens Aktiengesellschaft, 80333 München (DE)
(72) Erfinder: Batz, Sascha, 91334 Hemhofen (DE); Niessen, Stefan, 91056 Erlangen (DE); Thiem, Sebastian, 91413 Neustadt an der Aisch (DE)
(74) Vertreter: Siemens Patent Attorneys

(57) **Zusammenfassung**

Die Erfindung betrifft ein Verfahren zum Betreiben eines Geräts, im folgenden als Feldgerät bezeichnet, in einem System mit einer IoT-Plattform.

Für eine einfache Anbindung eines Feldgeräts an eine IoT-Plattform und einen verbesserten Betrieb ist eine Datenbank vorgesehen, in der Konnektivitätsdaten und weitere Gerätedaten des Feldgeräts gespeichert sind und auf die die IoT-Plattform zugreifen kann. Zur Anbindung des Feldgeräts wird eine Geräte-ID des Feldgeräts an die IoT-Plattform übermittelt und die zugehörigen Konnektivitätsdaten werden aus der Datenbank abgefragt. Im Betrieb werden die weiteren Gerätedaten, ggf. auch von weiteren Feldgeräten, ausgewertet und ein Signal zur Steuerung oder Regelung des Feldgeräts oder anderer Geräte erzeugt.

## Beschreibung

Die Erfindung betrifft ein Verfahren zum Betreiben eines Geräts, im folgenden als Feldgerät bezeichnet, in einem System mit einer IoT-Plattform.

Unterschiedlichste Feldgeräte werden heutzutage mit einer IT-Infratruktur, üblicherweise als Cloud bezeichnet, verbunden, um beispielsweise eine Steuerung oder eine Überwachung des Feldgeräts zu ermöglichen, oder um von ihm erfasste Daten für beliebige Analysen auszulesen. Dies geschieht über eine IoT-Plattform, die ähnlich einem Betriebssystem den Zugriff auf das Feldgerät und eine bidirektionale Kommunikation ermöglicht.

Das Betreiben des Feldgeräts umfasst auch seine Inbetriebnahme mit der erstmaligen Verbindung des Feldgeräts mit der IoT-Plattform, auch als IoT-Integration bezeichnet.

Ein Beispiel für ein IoT-System mit mindestens einem Feldgerät umfasst ein Energiemanagesystem eines Gebäudes oder eines Industriestandorts. In dem Gebäude sind typischerweise viele Feldgeräte vorhanden und zu Anlagen zusammengefasst. Als Anlagen können Wärmepumpen, Photo-voltaik-Anlagen, Elektroladesäulen und/oder üblicherweise als Batterie bezeichnete Akkumulatoren vorhanden sein. Das Energiemanagementsystem kann einen optimalen "Fahrplan" für die Erzeugung von Energie/Versorgung und den Verbrauch berechnen. Dafür benötigt es Daten der Anlagen bzw. Feldgeräte, die einem Datenblatt des Feldgeräts entnommen werden können, beispielsweise die maximale Lade- und Entladeleistung der Batterie und ihre Kapazität. Ferner benötigt das Energiemanagementsystem Informationen über den aktuellen Zustand des Energiesystems, hierfür muss es vom Feldgerät erfasste Daten auslesen. Weiter muss es die Anlagen während des Betriebs steuern, um die Energieversorgung zu optimieren.

Die Anlagen bzw. die Feldgeräte müssen also an das Energiemanagementsystem angebunden werden. Dies ist nach derzeitigem Stand der Technik aufwändig, zeitintensiv und fehleranfällig, was am Beispiel der Batterie verdeutlicht werden kann: jemand muss vor Ort den Hersteller und Typ der Batterie identifizieren und sich das dazugehörige Datenblatt verschaffen. Anschließend muss er mit Hilfe des Datenblatts recherchieren, über welches Protokoll die Batterie angesprochen werden kann (bspw. Modbus, BACNet, ...). Außerdem muss ermittelt werden, auf welchen Registern welche Messwerte bzw. Daten (bspw. der Ladezustand der Batterie) liegen und in welcher Einheit/ welchem Format, sowie über welche Register die Batterie gesteuert werden kann (bspw. ihre Lade- bzw. Entladeleistung). Alle diese Daten werden dann typischerweise an einem Terminal in ein entsprechendes Formular/Maske/UI eingegeben, erst dann ist die Anbindung des Feldgeräts möglich.

Wenn das Feldgerät nach der Anbindung betrieben wird, ist es Alterungsprozessen und Fehlerquellen ausgesetzt, die u.U. zum Ausfall einer gesamten Anlage führen können.

Aufgabe der Erfindung ist es, die Anbindung eines Feldgeräts an eine IoT-Plattform zu vereinfachen, die Fehleranfälligkeit zu reduzieren und seinen weiteren Betrieb zu verbessern. Diese Aufgaben werden gelöst durch ein Verfahren mit den Merkmalen des Patentanspruchs 1 und ein System mit den Merkmalen des Patentanspruchs 12.

Vorteilhafte Ausgestaltungen der Erfindung sind in den Unteransprüchen angegeben.

Die Erfindung sieht die Verwendung einer Datenbank vor, in der die für den Anschluss eines Feldgeräts notwendigen Daten (im Folgenden als Konnektivitätsdaten bezeichnet) gespeichert sind oder gespeichert werden und auf die die IoT-Plattform zugreifen kann. Das Verfahren sieht vor, lediglich eine Identifikation des Feldgeräts (im Folgenden als Geräte-ID bezeichnet) an die IoT-Plattform zu senden. Diese wird mit der oder den in der Datenbank gespeicherten Geräte-IDs verglichen, und bei einer Übereinstimmung werden die zu der Geräte-ID zugehörigen Konnektivitätsdaten an die IoT-Plattform übermittelt. Die Verbindung zwischen dem Feldgerät und der IoT-Plattform kann anhand der Konnektivitätsdaten hergestellt werden. Es werden - insbesondere im Verlauf des weiteren Betriebs des Feldgeräts oder der Anlage - weitere Gerätedaten des Feldgeräts an die IoT-Plattform übermittelt und in der Datenbank unter Zuordnung zur Geräte-ID gespeichert. Dadurch werden ein stetiges Lernen und Erweitern der Datenbank bzw. der IOT-Plattform ermöglicht. Die weiteren Gerätedaten des Feldgeräts und ggf. weiterer an die IoT-Plattform angeschlossener Feldgeräte werden ausgewertet, und basieren auf der Auswertung wird ein Signal zur Steuerung und/oder Regelung des Feldgeräts und/oder anderer an die IoT-Plattform direkt oder indirekt angeschlossener Feldgeräte oder Anlagen ausgegeben.

Für den Fall, dass die übermittelte Geräte-ID in der Datenbank nicht vorhanden ist, wird die Geräte-ID in der Datenbank gespeichert. Ferner werden die Konnektivitätsdaten angefordert, beispielsweise sendet die IoT-Plattform eine Anfrage an eine andere Datenbank oder an den Benutzer des Feldgeräts oder der Anlage. Nach Erhalt und Speicherung in der Datenbank ist die Anbindung wie beschrieben möglich.

Für den Fall, dass die übermittelte Geräte-ID in der Datenbak vorhanden ist, aber keine zugehörigen Konnektivitätsdaten vorhanden sind, werden die Konnektivitätsdaten wie oben angefordert und gespeichert.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein.

Die vorliegende Erfindung weist beispielsweise den Vorteil auf, dass Zeitaufwand und Kosten für die Anbindung bzw. für den Anschluss der Geräte an die Cloud reduziert werden können. Weiterhin ist das erfindungsgemäße Verfahren weniger fehleranfällig. Insbesondere können weitere Applikationen, wie Energiemanagementsysteme, deutlich effizienter in Betrieb genommen werden. Weiterhin sind die übermittelten/gespeicherten Daten einer Datenanalyse zugänglich, sodass weitere Fehlerquellen und/oder Einsparpotenziale erkannt und verwendet werden können.

Insbesondere ermöglicht das erfindunsgemäße Verfahren ein effizientes Anbinden von Geräten (engl. Devices bzw. Edge-Devices) an eine IOT-Plattform, ein Erweitern der Datenbank durch Daten aus dem Feld, die über die dann angebundene IOT-Plattform zur Datenbank rückgespielt werden, sowie ein Kategorisieren der Daten, bspw. gemäß für den Techniker leicht erkennbarer abstrahierter Klassen.

Gemäß einer Ausführungsform wird als Geräte-ID ein Bild des Feldgeräts oder von einem Teil des Feldgeräts, bespielsweise von einem Label, übermittelt. Die Geräte-ID kann auch ein Barcode oder ein QR-Code sein, oder es kann der Produktname, evtl. in Verbindung mit dem Herstellernamen verwendet werden.

Dadurch wird vorteilhafterweise eine Identifikation des Gerätes, insbesondere bei unbekannten Konnektivitätsdaten, ermöglicht.

Gemäß einer Ausführungsform enthalten die Konnektivitätsdaten eine Information über einen Anschluss, ein Protokoll, ein Register und/oder ein abstraktes generisches Device-Modell.

Dadurch können vorteilhafterweise die für die Anbindung des Gerätes erforderlichen Konnektivitätsdaten verbessert ermittelt werden.

Vorzugsweise fordert die IoT-Plattform die weiteren Gerätedaten an, die insbesondere ebenfalls gespeichert werden. Beispielsweise kann die IoT-Plattform einen Techniker/ Benutzer vor Ort auffordern, diese weiteren Daten einzugegeben. Nach dieser Benutzereingabe werden die eingetragenen Daten an die IoT-Plattform übermittelt. Insbesondere erkennt die IoT-Plattform, welche Daten fehlen bzw. besondere Bedeutung für das Herstellen der Verbindung haben. Der Benutzer wird somit nicht zur Eingabe fester oder aller weiteren Gerätedaten aufgefordert, sondern lediglich zur Eingabe von om genannten Sinne brauchbaren Daten.

Für den Vergleich der Geräte-ID des Feldgeräts mit in der Datenbank gespeicherten Geräte-IDs kann ein Verfahren/ Algorithmus der KI und damit ein neuronales Netz verwendet werden. Das ist insbesondere vorteilhaft, wenn als Geräte-ID ein Bild verwendet wird. Das Bild kann bevorzugt mittels eines Smartphones erfasst worden sein. Das neuronale Netz (KI) ist entsprechend anhand von bekannten Bildern bekannter Anlagen trainiert. Beispielsweise kann das Training mittels verschiedener Fotos/Bilder des Feldgerätes von verschiedenen Herstellern des Feldgerätes erfolgen. Dadurch ist vorteilhafterweise eine herstellerübergreifenden Erkennen/Andbinden möglich. Mit anderen Worten wird ein Bild des Feldgerätes erfasst, an die IoT-Plattform übermittelt, woraufhin das neuronale Netz das Feldgerät erkennt, die zugehörigen Konnektivitätsdaten ermittelt und anschließend übermittelt.

Als weitere Gerätedaten können Positionsdaten des Feldgeräts, insbesondere GPS-Koordinaten seines Aufstellorts, an die IoT-Plattform übermittelt und gespeichert werden. Anhand der Positionsdaten kann dann eine Verknüpfung mit externen positionsspezifischen Daten (z.B. Klima oder Wetter) erfolgen. Weiter kann aus der Verknüpfung oder aus den externen positionsspezifischen Daten eine probabilistische Aussage oder eine Simulation hinsichtlich einer Lebensdauer oder einer Schadensursache abgeleitet werden.

Alternativ oder zusätzlich können als weitere Gerätedaten Betriebsdaten, die im Betrieb des Feldgeräts erfasst werden, übermittelt und gespeichert werden. Es ist ferner vorteilhaft, diese Betriebsdaten beim Betrieb des Feldgeräts nachfolgend, vorzugsweise regelmäßig/laufend zu aktualisieren. Dadurch ist eine fortlaufende Überwachung und/oder Analysen bezüglich der zeitlichen Entwicklung von Parametern oder andere Datenanalysen möglich.

Alternativ oder zusätzlich kann eine Kategorisierung der Geräte, deren Geräte-IDs in der Datenbank gespeichert sind, erstellt werden. Hierzu kann eine abstrakte Beschreibung von Kategorien an Devices zu erstellen (z.B. einer Wärmepumpe, oder einer Wärmepumpe mit leistungsgeregeltem Verdichter) erstellt werden. Hierdurch können die anfänglich vorhandenen Daten sowie zusätzlich aus dem Feld gesammelten Daten (weitere Gerätedaten) strukturiert abgelegt werden sowie strukturiert verarbeitet und datenanalytischen weiteren Analysen zugänglich gemacht werden. Es kann beispielsweise in Abhängigkeit von Standort, Wettereinfluss und/oder weiteren Parametern die Performance, die Alterung usw. eines Feldgeräts analysiert werden.

Die Erfindung wird im Folgenden anhand von Ausführungsbeispielen sowie anhand der Figuren näher erläutert. Es zeigen
Figur 1 eine schematische Darstellung eines IoT-Systems gemäß einer Ausgestaltung der vorliegenden Erfindung; und
Figur 2 ein Flussdiagramm des erfindungsgemäßen Verfahrens.

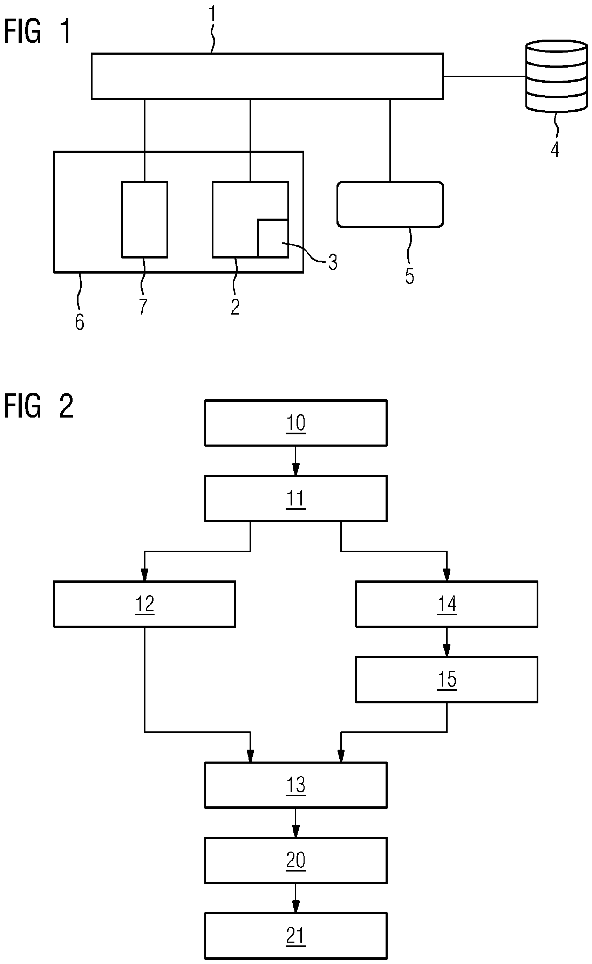

Fig.1 zeigt ein IoT-System mit einer IoT-Plattform 1 und einem Energiemanagementsystem 6, das u.a. eine Batterie 2 als Feldgerät umfasst. Die Batterie 2 weist eine Geräte-ID 3 in Form eines QR-Codes auf. Als weiteres Feldgerät weist das Energiemanagementsystem 6 eine Photovoltaik-Anlage 7 auf, die bereits an die IoT-Plattform angeschlossen ist und die die Batterie 2 laden kann. Die IoT-Plattform 1 kann auf eine Datenbank 4 zugreifen, in der Geräte-IDs mehrerer Batterien und der PV-Anlage mit zugehörigen Konnektivitätsdaten gespeichert sind. Die Datenbank kann für ein Feldgerät ggf. mehrere Geräte-IDs speichern. Ferner ist ein mit der IoT-Plattform verbundenes Terminal 5 vorhanden.

Um die in der Figur 1 dargestellte Verbindung zwischen dem Feldgerät 2 und der IoT-Plattform 1 herzustellen und dadurch das Feldgerät anzubinden, werden die in Figur 2 dargestellten Schritte durchgeführt.

Im Schritt 10 erfolgt die Eingabe einer Geräte-ID, hier der QR-Code 5, am Terminal 5, indem beispielsweise ein Techniker das Bild des QR-Codes 3 über ein User Interface zur IoT-Plattform hochlädt.

In Schritt 11 wird die Geräte-ID 3 von der IoT-Plattform an die Datenbank 4 gesendet, diese prüft, ob die Geräte-ID vorhanden ist und ob zu der Geräte-ID zugehörige Konnektivitätsdaten gespeichert sind. Falls beides bejaht wird, werden in Schritt 12 die Konnektivitätsdaten, insbesondere das verwendete Protokoll sowie Register und weitere benötigte Parameter, an die IoT-Plattform übermittelt und die IoT-Plattform stellt mit Hilfe dieser Konnektivitätsdaten die Verbindung mit dem Feldgerät 2 her (Schritt 13). Andernfalls wird der Nutzer zur Eingabe der benötigten Konnektivitätsdaten am Terminal aufgefordert (Schritt 14), diese Daten werden der Geräte-ID zugeordnet gespeichert bzw. wenn in der Datenbank die Geräte-ID nicht vorhanden ist, wird ein entsprechender neuer Datensatz angelegt und die Geräte-ID gespeichert, (Schritt 15). In jedem dieser Fälle wird dann die Verbindung mit dem Feldgerät hergestellt (Schritt 13).

Nach Herstellung der Verbindung übermittelt die Batterie 2 weitere Gerätedaten an die IoT-Plattform (Schritt 20), beispielsweise ihren aktuellen Ladezustand. Ebenso übermittelt die Photovoltaik-Anlage weitere Gerätedatem, beispielsweise Kenndaten wie ihren Standort und/oder Betriebsdaten wie ihre aktuelle Leistung. Die weiteren Gerätedaten werden ausgewertet und ein daraus abgeleitetes Signal erzeugt (Schritt 21), das zur Steuerung und/oder Regelung der Batterie oder eines beliebigen anderen Feldgeräts, das an die IoT-Plattform direkt oder indirekt angeschlossen ist, verwendet werden kann. Ferner werden die weiteren Gerätedaten in der Datenbank gespeichert.

Im beschriebenen Beipiel kann die Alterung der Batterie oder ihr Wirkungsgrad aus übermittelten Betriebsdaten (beispielsweise die benötigte Ladedauer oder die erreichte Kapazität) über einen bestimmten Zeitraum ermittelt werden. Diese Auswertung der Betriebsdaten kann für die Steuerung des Ladevorgangs durch die PV-Anlage eingesetzt werden, oder es kann ein Signal ausgegeben werden, das Wartungsmaßnahmen oder den notwendigen Wechsel der Batterie aufgrund der Alterungserscheinungen anzeigt.

Aus den Betriebsdaten Temperatur und Leistung der PV-Anlage kann beispielsweise die Temperaturabhängigkeit des Wirkungsgrades der Solarzellen ermittelt werden. Mithilfe der Positionsdaten können zukünftige Wetterbedingungen und damit die erwartete Leistung ermittelt werden. Eine solche Auswertung ermöglich die Steuerung des Ladevorgangs der Batterie und/oder die Steuerung von Verbrauchern im Energiemanagementsystem.

Durch die Übermittlung von weiteren Gerätedaten an die IoT-Plattform, die in der Datenbank gespeichert werden, ist eine Vielzahl unterschiedlicher Auswertungen möglich. Beispielsweise kann als bevorzugte Auswertung eine probabilistische Verteilung zur Leistungszahl (coefficient of performance, COP) oder eines anderen Parameters einer Wärmepumpe eines bestimmten Herstellers und eines bestimmten Typs berechnet werden. Diese Information kann weiteren Anwendungen, z.B. einem Energiemanagementsystem oder einem anderen System zur Fertigungsoptimierung bereitgestellt werden, um mit einer initialen Konfiguration bzw. Parametrierung eine verbesserte Steuerung des Systems zu ermöglichen.

## Patentansprüche

1. Verfahren zum Betreiben eines Feldgeräts in einem System mit einer IoT-Plattform, die Zugriff auf eine Datenbank hat, wobei in der Datenbank Konnektivitätsdaten für mindestens ein Gerät sowie eine zugehörige Geräte-ID dieses Geräts gespeichert sind, mit folgenden Schritten:
- Übermitteln einer Geräte-ID (3) des Feldgeräts an die IoT-Plattform (1)
- Vergleichen der Geräte-ID (3) des Feldgeräts mit in der Datenbank (4) gespeicherten Geräte-IDs
- Übermitteln der zur Geräte-ID (3) zugehörigen Konnektivitätsdaten an die IoT-Plattform (1), wenn diese in der Datenbank (4) gespeichert sind,
oder
Anfordern der Konnektivitätsdaten zu der Geräte-ID (3), wenn diese nicht in der Datenbank (4) gespeichert sind, und Speichern der erhaltenen Konnektivitätsdaten und ggf. der Geräte-ID in der Datenbank (4)
- Herstellen einer Verbindung zwischen dem Feldgerät (2) und der IoT-Plattform (1) unter Verwendung der Konnektivitätsdaten des Feldgeräts (2),
- Übermitteln von weiteren Gerätedaten des Feldgeräts (2) an die IoT-Plattform (1) und Speichern der weiteren Gerätedaten des Feldgeräts zugeordnet zur Geräte-ID in der Datenbank (4),
- Auswerten der weiteren Gerätedaten des Feldgeräts (2) und/oder anderer an die IoT-Plattform (1) angeschlossener Geräte (7),
- Ausgeben eines auf der Auswertung basierenden Signals für den Betrieb des Feldgeräts (2) und/oder anderer an die IoT-Plattform direkt oder indirekt angeschlossener Geräte (7).

2. Verfahren nach Anspruch 1, **dadurch gekennzeichnet, dass** die Konnektivitätsdaten eine Information über einen Anschluss, ein Protokoll, ein Register und/oder ein abstraktes generisches Device-Modell enthalten.

3. Verfahren nach einem der vorhergehenden Ansprüche,
**dadurch gekennzeichnet, dass** die IoT-Plattform (1) die weiteren Gerätedaten über ein angeschlossenes Terminal (5) anfordert.

4. Verfahren nach einem der vorhergehenden Ansprüche,
**dadurch gekennzeichnet, dass** beim Vergleichen der Geräte-ID des Feldgeräts (2) mit in der Datenbank gespeicherten Geräte-IDs ein neuronales Netz verwendet wird.

5. Verfahren nach einem der vorhergehenden Ansprüche,
**dadurch gekennzeichnet, dass** als Geräte-ID (3) ein Bild des Feldgeräts (2) oder von einem Teil des Feldgeräts übermittelt wird.

6. Verfahren nach einem der vorhergehenden Ansprüche,
**dadurch gekennzeichnet, dass** als weitere Gerätedaten Positionsdaten des Feldgeräts (2), insbesondere GPS-Koordinaten seines Aufstellorts, gespeichert werden.

7. Verfahren nach Anspruch 6, **dadurch gekennzeichnet, dass** anhand der Positionsdaten eine Verknüpfung mit externen positionsspezifischen Daten erfolgt.

8. Verfahren nach Anspruch 7, **dadurch gekennzeichnet, dass** aus der Verknüpfung oder aus den externen positionsspezifischen Daten eine probabilistische Aussage/Simulation hinsichtlich der Lebensdauer oder einer Schadensursache abgeleitet wird.

9. Verfahren nach einem der vorhergehenden Ansprüche,
**dadurch gekennzeichnet, dass** als weitere Gerätedaten Betriebsdaten, die im Betrieb des Feldgeräts (2) erfasst werden, gespeichert werden.

10. Verfahren nach dem vorhergehenden Anspruch, **dadurch gekennzeichnet, dass** die Betriebsdaten beim Betrieb des Feldgeräts (2) regelmäßig/laufend aktualisiert werden.

11. Verfahren nach einem der vorhergehenden Ansprüche,
**dadurch gekennzeichnet, dass** eine Kategorisierung der Geräte, deren Geräte-ID in der Datenbank gespeichert sind, erstellt wird.

12. System mit einer IoT-Plattform (1), die Zugriff auf eine Datenbank (4) hat, und mindestens einem Feldgerät (2) zur Durchführung des Verfahrens nach einem der Ansprüche 1 - 11.

13. Feldgerät zur Durchführung des Verfahrens nach einem der Ansprüche 1 - 11.
